# EUROPÄISCHE PATENTSCHRIFT

(11) **EP 3 742 515 B1**
(45) Veröffentlichungstag und Bekanntmachung des Hinweises auf die Patenterteilung: **18.12.2024**
(21) Anmeldenummer: 19176097.4
(22) Anmeldetag: 23.05.2019
(51) Int. Cl.: H01M 10/0525, H01M 50/109, H01M 50/184, H01M 50/171, H01M 50/186, H01M 50/193, H01M 10/30, H01M 10/34, H01M 12/06

(54) **HERSTELLUNGSVERFAHREN FÜR KNOPFZELLEN UND KNOPFZELLE**
BUTTON CELL AND METHOD FOR THE PRODUCTION OF BUTTON CELLS
PROCÉDÉ DE FABRICATION DE PILE BOUTON ET PILE BOUTON

(43) Veröffentlichungstag der Anmeldung: 25.11.2020
(73) Patentinhaber: VARTA Microbattery GmbH, 73479 Ellwangen Jagst (DE)
(72) Erfinder: KOHLS, Ulrich, 73460 Hüttlingen (DE); KREIDLER, Bernd, 73479 Ellwangen (DE)
(74) Vertreter: Ostertag & Partner Patentanwälte mbB

(56) Entgegenhaltungen:
- EP-A1- 2 230 704
- DE-A1- 102008 018 172
- DE-A1- 19 647 593
- DE-A1- 19 647 593
- US-A1- 2013 143 104

## Beschreibung

Die nachfolgend beschriebene Erfindung betrifft ein Verfahren zur Herstellung einer Knopfzelle und eine gemäß dem Verfahren herstellbare Knopfzelle.

Eine besonders bekannte Ausführungsform einer elektrochemischen Zelle ist die Knopfzelle. Eine Knopfzelle weist üblicherweise ein zylindrisches Gehäuse auf, dessen Höhe kleiner als sein Durchmesser ist und das eine positive und eine negative Elektrode einschließt.

Das Gehäuse von Knopfzellen besteht in aller Regel aus zwei metallischen Gehäuseteilen, zwischen denen ein elektrisch isolierendes Dichtelement angeordnet ist. Eines der Gehäuseteile steht in elektrischer Verbindung mit der positiven Elektrode und ist entsprechend positiv gepolt. Das andere Gehäuseteil steht in elektrischer Verbindung mit der negativen Elektrode und ist entsprechend negativ gepolt. Das Dichtelement soll einen elektrischen Kontakt zwischen den entgegengesetzt gepolten Gehäuseteilen unterbinden. Darüber hinaus soll es einem Entweichen und auch einem Eindringen von Flüssigkeit oder Feuchtigkeit aus dem oder in das Gehäuse entgegenwirken.

In dem Gehäuse können unterschiedliche elektrochemische Systeme enthalten sein. Sehr verbreitet sind Knopfzellen auf Basis von Zink/Luft, Zink/MnO₂ und Nickel/Zink. Auch sekundäre Systeme, z.B. auf Basis von Nickel/Metallhydrid, Nickel/Cadmium oder auf Basis von Lithium, sind sehr verbreitet.

Die zur Herstellung von Knopfzellen verwendeten Dichtelemente werden klassisch im Spritzgussverfahren, beispielsweise aus Polyamiden, hergestellt. Die hierfür benötigten Spritzwerkzeuge sind allerdings sehr teuer. Weiterhin ist es sehr schwierig, über ein Spritzgussverfahren Dichtelemente mit Wandstärken von 0,1 mm und weniger herzustellen. Je höher die Wandstärke eines Dichtelements ist, desto mehr Volumen beansprucht das Dichtelement und desto stärker beeinträchtigt es die effiziente Kapazitätsausnutzung einer Knopfzelle.

Aus der DE 196 47 593 A1 der Anmelderin ist der Einsatz eines Dichtelements bekannt, das durch Tiefziehen aus einer Folie hergestellt wird. Aus einer beheizten Folie wird mittels einer Ziehmatrize und eines Formstempels unter Vakuum ein becherförmiges Formteil gezogen. Im Bodenbereich des durch Tiefziehen hergestellten Formteils erfolgt anschließend eine Ausstanzung mittels eines Schnittstempels und einer Schnittbuchse. In Abhängigkeit der gewählten Verfahrensparameter lassen sich mit diesem Verfahren Dichtelemente mit Wandstärken von deutlich unter 0,1 mm herstellen.

Eine Knopfzelle mit einem solchen Dichtelement bietet im Hinblick auf die erzielbare Kapazitätsausnutzung gegenüber Knopfzellen mit Dichtelementen aus Spritzgussteilen deutliche Vorteile. Ungeachtet dessen sind dem Streben nach immer dünneren Dichtelementen aus einem anderen Grund Grenzen gesetzt. Je dünner die eingesetzten Dichtelemente sind, desto schwieriger lassen sie sich verarbeiten. Zur Verarbeitung bedarf es einer hinreichenden mechanischen Belastbarkeit. Diese ist bei Dicken < 0,1 mm oft nicht mehr gegeben.

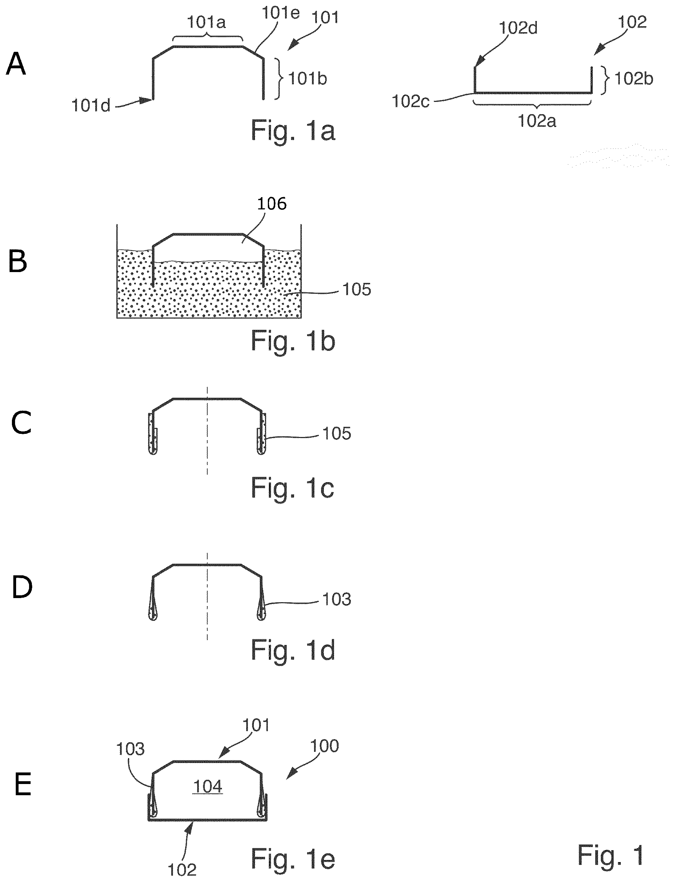

Aus der EP 2258010 B1 der Anmelderin ist es bekannt, Knopfzellengehäuseteile im Dichtbereich mit Parylenen, Ormoceren oder Kunststoffen zu beschichten. Die beschriebenen PVD-Verfahren erwiesen sich allerdings als sehr teuer und aufwendig. Darüber hinaus war eine Maskierung erforderlich, um unerwünschte Beschichtungen zu vermeiden. Probleme ergaben sich weiterhin bei Gehäuseteilen, die im Gegensatz zu einem durch Umschlagen gebildeten doppelwandigen Rand, wie er beispielsweise in den Figuren 1 und 2 der JP 2002-373711 A dargestellt ist, vollständig einwandig ausgebildet sind und eine endständige Schnittkante aufweisen. Während durch Spritzguss hergestellte Dichtelemente solche Schnittkanten gut abzuschirmen vermögen, wurden die durch die in der EP 2258010 B1 beschriebenen Beschichtungsverfahren gebildeten Beschichtungen durch die Schnittkante relativ leicht beschädigt, was zu unerwünschten Gasungseffekten führte.

EP 2 230 704 A1 offenbart eine Knopfzelle, die mit einem Gehäuse umfassend einen Zellenbecher, einen Zellendeckel und eine Dichtung, die den Zellenbecher und den Zellendeckel gegeneinander isoliert. Das Gehäuse weist auf seiner Außenseite eine elektrisch leitende Beschichtung und/oder eine elektrisch nichtleitende Beschichtung aufweist. Bei dieser Beschichtung kann es sich um einen dünnen Polymerfilm handelt, der durch Aufbringen und anschließendes Aushärten eines Polymervorläufers gebildet wurde.

Der vorliegenden Erfindung lag die Aufgabe zugrunde, unter Berücksichtigung der beschriebenen Probleme verbesserte Knopfzellen mit möglichst dünnen Dichtelementen bereitzustellen.

Zur Lösung dieser Aufgabe schlägt die Erfindung ein Verfahren mit den in Anspruch 1 genannten Merkmalen sowie eine Knopfzelle mit den in Anspruch 4 genannten Merkmalen vor. Weiterbildungen der Erfindung sind Gegenstand von Unteransprüchen.

Die gemäß dem erfindungsgemäßen Verfahren herstellbaren erfindungsgemäßen Knopfzellen zeichnen sich durch die folgenden Merkmale aus:
a. Ein Gehäuse mit einem Innenraum, in dem
   - eine positive Elektrode und
   - eine negative Elektrode und
   - ein Separator
   angeordnet sind.
b. Das Gehäuse umfasst
   - ein becherförmiges, metallisches erstes Gehäuseteil sowie
   - ein becherförmiges, metallisches zweites Gehäuseteil sowie
   - ein elektrisch isolierendes Dichtelement zwischen den Gehäuseteilen.
c. Die Gehäuseteile umfassen jeweils
   - einen kreisförmigen Boden,
   - einen hohlzylindrischen Mantel,
   - einen den Boden und den Mantel verbindenden umlaufenden Übergangsbereich und
   - einen eine kreisförmige Öffnung definierenden Öffnungsrand.
d. Die Böden und Mäntel weisen jeweils eine in den Innenraum weisende Innenseite und eine in die entgegengesetzte Richtung weisende Außenseite auf und die Öffnungsränder liegen jeweils in einer parallel zum jeweiligen Boden ausgerichteten Ebene.

Das erste und das zweite Gehäuseteil sind bevorzugt aus metallischen Materialien wie vernickeltem Stahl oder Blech gefertigt. Weiterhin geeignet ist insbesondere auch Trimetall, beispielsweise mit der Abfolge Nickel, Stahl und Kupfer (von außen nach innen).

Bevorzugt sind die kreisringförmigen Böden des ersten und des zweiten Gehäuseteils planar oder zumindest im Wesentlichen planar ausgebildet. Besonders bevorzugt schließt die Böden mit den hohlzylindrischen Mänteln der Gehäuseteile einen Winkel Θ von 90° ± 3°, besonders bevorzugt von 90° ± 1°, ein.

Die die Böden und die Mäntel verbindenden Übergangsbereiche umfassen bevorzugt die Teile des ersten und des zweiten Gehäuseteils, die außerhalb der Ebene der Böden liegen und noch nicht Teil des jeweils dazugehörigen hohlzylindrischen Mantels sind. Die Übergangsbereiche können unabhängig voneinander abgerundet ausgebildet sein, beispielsweise schulterförmig, oder auch die Form einer scharfen Kante haben.

Die Böden des ersten und des zweiten Gehäuseteils sind in der Knopfzelle parallel zueinander ausgerichtet. Der Abstand der Außenseiten der Böden definiert die Höhe der Knopfzelle.

Es ist bevorzugt, dass der hohlzylindrische Mantel der Gehäuseteile axial auf einer Seite durch die Übergangsbereiche zu den Böden und auf der anderen Seite durch Öffnungsrand begrenzt wird.

In bevorzugten Ausführungsformen dominieren die hohlzylindrischen Mäntel und die zueinander parallelen Böden die Form der Knopfzelle, deren Gehäuse entsprechend bevorzugt eine zylindrische oder zumindest eine im Wesentlichen zylindrische Geometrie aufweist.

Es ist bevorzugt, dass bei der Montage der Knopfzelle das erste Gehäuseteil mit dem Öffnungsrand voran in das zweite Gehäuseteil eingeschoben wird bis der Öffnungsrand auf dem Boden des zweiten Gehäuseteils oder einem Stützring aufsitzt. Die Verbindungsgerade durch den Mittelpunkt des Bodens des zweiten Gehäuseteils und das Zentrum seiner kreisförmigen Öffnung definiert dabei die Achse (axiale Richtung), entlang der das Einschieben des ersten Gehäuseteils in das zweite Gehäuseteil erfolgt.

Zum Verschluss der Knopfzelle kann der Rand des zweiten Gehäuseteils nach dem Einschieben des ersten Gehäuseteils radial nach innen umgebogen werden. Diesen Vorgang bezeichnet man gemeinhin als Bördelung.

Bei der erfindungsgemäßen Knopfzelle handelt es sich bevorzugt um eine Zink/Luft-Zelle, eine Silberoxid/Zink-Zelle, eine Zink/Braunstein-Zelle (auch bekannt als Alkali-Mangan-Zelle), eine Quecksilberoxid/Zink-Zelle, eine Nickel/Eisen-Zelle (Edison-Akkumulator), eine Nickel/Metallhydrid-Zelle, eine Nickel/Zink-Zelle oder eine Nickel/Cadmium-Zelle. Entsprechend ist die negative Elektrode bevorzugt eine Zink-Elektrode, eine Eisen-Elektrode, eine Metallhydrid-Elektrode oder eine Cadmium-Elektrode. Bei der positiven Elektrode handelt es sich bevorzugt um eine Luftkathode, eine Silberoxid-Kathode, eine Braunstein-Kathode, eine Quecksilberoxid-Kathode oder eine Nickeloxyhydroxid-Kathode.

Alternativ kann es sich bei der erfindungsgemäßen Knopfzelle auch um eine Lithium-Zelle handeln, also um eine Zelle, die mindestens eine Lithium-interkalierende Elektrode umfasst.

Bei dem Separator kann es sich beispielsweise um eine poröse Kunststofffolie oder um ein Kunststoffvlies handeln.

Die Elektroden und der Separator sind in aller Regel mit einem wässrigen, alkalischen Elektrolyten, beispielsweise mit Kalilauge oder Natronlauge, getränkt. Wenn die erfindungsgemäße Knopfzelle allerdings eine Lithium-Zelle ist, dann wird als Elektrolyt üblicherweise ein organisches Lösungsmittel, meist eine Mischung organischer Carbonate, gewählt, das mit einem Lithium-Leitsalz versetzt ist.

Bevorzugt werden die Elektroden und der Separator in den Gehäuseteilen positioniert, bevor das zweite Gehäuseteil in das erste Gehäuseteil eingeschoben wird. Im Falle einer Zink/Luft-Zelle können beispielsweise eine Luftkathode und ein Separator in das zweite Gehäuseteil eingelegt werden während eine Zinkanode in Pastenform in dem ersten Gehäuseteil positioniert wird, das dann mitsamt der Zinkanode in das zweite Gehäuseteil eingeschoben wird.

Das erfindungsgemäße Verfahren zur Herstellung von Knopfzellen mit den obenstehenden Merkmalen a. bis d. umfasst die folgenden Schritte:
e. Die Innenseite und die Außenseite des Mantels und der Öffnungsrand des ersten Gehäuseteils werden mit einem flüssigen Kunststoffvorläufer beschichtet,
f. Der flüssige Kunststoffvorläufer wird unter Ausbildung einer festen Kunststoffbeschichtung auf dem ersten Gehäuseteil getrocknet und/oder gehärtet, wobei der Öffnungsrand des ersten Gehäuseteils zumindest zeitweise senkrecht oder mit einer Abweichung von maximal 5° von der Lotrichtung (der örtlichen Richtung der Schwerebeschleunigung des Erdgravitationsfeldes) nach unten weist, und
g. das Gehäuse wird aus dem ersten und dem zweiten Gehäuseteil zusammengesetzt, wobei die Kunststoffbeschichtung das Dichtelement bildet.

Zur Herstellung der erfindungsgemäßen Knopfzelle wird also keine der eingangs beschriebenen klassischen Spritzguss- oder Foliendichtungen verwendet. Stattdessen wird das Dichtelement auf dem Mantel des ersten Gehäuseteils aus dem Kunststoffvorläufer gebildet.

Der Begriff Kunststoffvorläufer meint dabei alle ein- und mehrkomponentigen Systeme, aus denen feste Kunststoffe gewonnen werden können. Es kann sich bei dem Kunststoffvorläufer um Einzelmonomere und/oder vorvernetzte Monomer-, Oligomer- und Polymerkomponenten handeln. Der Kunststoffvorläufer kann thermisch und/oder durch Strahlung vernetzbar sein. Ihm können Additive wie Vernetzer, Photoinitiatoren und Radikalstarter zugesetzt sein. Insbesondere kann er auch Lösemittel enthalten. Weiterhin kann es sich dem Kunststoffvorläufer auch um eine Schmelze eines Kunststoffs handeln.

Da, wie eingangs erwähnt, einem Dichtelement in Kopfzellen nicht nur eine dichtende sondern auch eine isolierende Funktion zukommt, wird der Kunststoffvorläufer bevorzugt so gewählt, dass er nach der Trocknung und/oder Härtung elektrisch isolierende Eigenschaften aufweist. Daneben ist es in der Regel bevorzugt, dass der Kunststoffvorläufer nach der Trocknung und/oder Härtung chemisch inert gegenüber den oben genannten Elektrolyten, insbesondere gegenüber wässrigen alkalischen Elektrolyten und/oder organischen Elektrolyten, insbesondere solchen auf Carbonatbasis, ist. Besonders bevorzugt werden als Kunststoffvorläufer Vorläufer für Kunststoffe auf Epoxid-, Polyester-, Polyamid-, Polyacrylat-, Polyethylen-, Polypropylen-, Polysulfon- oder Polyurethanbasis verwendet.

Die Ausgestaltung des Schritts des Trocknens und/oder Härtens hängt von der stofflichen Beschaffenheit des Kunststoffvorläufers ab. Handelt es sich bei dem Kunststoffvorläufer um eine Schmelze eines Kunststoffs, so ist lediglich ein Härten erforderlich, das mit fortschreitender Abkühlung der Schmelze automatisch eintritt. Handelt es sich bei dem Kunststoffvorläufer hingegen um Einzelmonomere und/oder vorvernetzte Monomer-, Oligomer- und Polymerkomponenten, die zur Härtung einer weiteren Vernetzung, ggf. einer Trocknung bedürfen, so kann der Schritt aufwendiger ausgestaltet sein. Im Falle einer Vernetzung durch Strahlung müssen beispielsweise entsprechende Strahlungsquellen zum Einsatz kommen.

Das Zusammensetzen des Gehäuses umfasst bevorzugt das oben beschriebene Einschieben des ersten in das zweite Gehäuseteil sowie anschließend den Verschluss der Knopfzelle, insbesondere durch die erwähnte Bördelung.

In einer besonders bevorzugten Ausführungsform zeichnet sich das Verfahren durch einen der unmittelbarfolgenden zusätzlichen Schritte a. und b. aus:
a. Das Beschichten des ersten Gehäuseteils erfolgt durch Eintauchen des ersten Gehäuseteils in den flüssigen Kunststoffvorläufer.
b. Das Beschichten des ersten Gehäuseteils erfolgt durch Besprühen oder Bepinseln des ersten Gehäuseteils mit dem flüssigen Kunststoffvorläufer.

Das Beschichten gemäß Schritt a. ist in einigen Ausführungsformen besonders vorteilhaft, da eine Maskierung nicht zu beschichtender Bereiche des Gehäuseteils unterbleiben kann. Im einfachsten Fall kann hierzu das erste Gehäuseteil mit senkrecht nach unten gerichtetem Öffnungsrand in den Kunststoffvorläufer eingetaucht werden. Hierbei werden die Innen- und die Außenseite sowie der Öffnungsrand des ersten Gehäuseteils mit dem Kunststoffvorläufer benetzt.

Es kann vorteilhaft sein, die Innenseite und die Außenseite des Mantels des ersten Gehäuseteils vollständig mit dem flüssigen Kunststoffvorläufer zu beschichten. In den meisten bevorzugten Ausführungsformen erfolgt allerdings nur eine teilweise Beschichtung der Innen- und der Außenseite.

In einer Weiterbildung der Erfindung kann es bevorzugt sein, die Innenseite und die Außenseite des Mantels und der Öffnungsrand des ersten Gehäuseteils in zwei oder mehr separaten Schritten mit dem flüssigen Kunststoffvorläufer zu beschichten. So kann beispielsweise in einem ersten Schritt das Beschichten des ersten Gehäuseteils durch das Eintauchen des ersten Gehäuseteils in den flüssigen Kunststoffvorläufer vorgenommen werden. In einem zweiten Schritt kann dann die Beschichtung in mindestens einem Bereich durch nochmaliges Aufbringen des flüssigen Kunststoffvorläufers verstärkt werden. Zwischen den beiden Schritten kann ein Trocknungs- und/oder Härtungsschritt liegen. So lässt sich die Dicke der Kunststoffbeschichtung bei Bedarf lokal steuern.

In einer weiteren besonders bevorzugten Ausführungsform zeichnet sich das Verfahren durch mindestens einen der unmittelbar folgenden zusätzlichen Schritte a. bis c. aus:
a. Auf die Innenseite des Mantels des ersten Gehäuseteils wird ein ringförmiger Streifen konstanter Breite aus dem flüssigen Kunststoffvorläufer aufgebracht, der sich ausgehend von dem Öffnungsrand in Richtung des Bodens des ersten Gehäuseteils erstreckt.
b. Auf die Außenseite des Mantels des ersten Gehäuseteils wird ein ringförmiger Streifen konstanter Breite aus dem flüssigen Kunststoffvorläufer aufgebracht, der sich ausgehend von dem Öffnungsrand in Richtung des Bodens des ersten Gehäuseteils erstreckt.
c. Die Breite des auf die Außenseite des Mantels des ersten Gehäuseteils aufgebrachten ringförmigen Streifens übersteigt die Breite des auf die Innenseite des Mantels des ersten Gehäuseteils aufgebrachten ringförmigen Streifens.

Besonders bevorzugt sind die Schritte a. und b., insbesondere die Schritte a. bis c., in Kombination miteinander realisiert.

Die ringförmigen Streifen konstanter Breite lassen sich am leichtesten realisieren, indem das erste Gehäuseteil, wie oben beschrieben, mit senkrecht nach unten gerichtetem Öffnungsrand in den flüssigen Kunststoffvorläufer eingetaucht wird. Insbesondere lassen sich so auch unterschiedliche Streifenbreiten auf der Innen- und der Außenseite realisieren. Da bei senkrechtem Eintauchen in dem Gehäuseteil eine Luftblase eingeschlossen wird, die sich nicht verdrängen lässt, kann der Kunststoffvorläufer die Innenseite des Mantels auch bei einem sehr tiefen Eintauchen nicht vollständig benetzen.

Die Höhe Innen- und Außenbeschichtung kann auch variiert werden durch entsprechende schräge Ausrichtung des Gehäuseteils beim Eintauchen.

Die unterschiedliche Höhe der resultierenden Beschichtung der Innen- und der Außenseite kann mit großen Vorteilen verbunden sein. In der Regel ist es vorteilhaft, dass der Mantel außenseitig mehr oder weniger vollständig mit dem Kunststoffvorläufer überzogen wird. In diesen Bereichen muss ein unmittelbarer Kontakt des ersten und des zweiten Gehäuseteils unterbunden werden, um einen elektrischen Kurzschluss zu vermeiden. Hingegen kann eine innenseitige Beschichtung aus dem Kunststoffvorläufer verhindern, dass eine Elektrode das erste Gehäuseteil elektrisch kontaktiert. Aus diesem Grund ist es in einigen Ausführungsformen wünschenswert, dass lediglich ein dünner, unmittelbar an den Öffnungsrand angrenzender Streifen der Mantelinnenseite mit dem Kunststoffvorläufer beschichtet wird.

In einigen anderen Ausführungsformen ist der Streifen auch innenseitig sehr breit ausgebildet um Bereiche des Gehäuseteils abzudecken, die bei der Herstellung des Gehäuseteils mittels Tiefziehen mechanisch besonders stark belastet werden. Diese mechanischen Belastungen können zu Defekten an der Metalloberfläche des Gehäuseteils führen, welche wiederum eine Gasung und dementsprechend Performance-Einbußen der Zelle verursachen können.

Eine gemäß obigem Verfahren herstellbare erfindungsgemäße Knopfzelle zeichnet sich neben den oben bereits genannten Merkmalen a. bis d. insbesondere auch durch die folgenden zusätzlichen Merkmale aus:
e. Die Innenseite und die Außenseite des Mantels und der Öffnungsrand des ersten Gehäuseteils sind mit einer festen, stoffschlüssig mit den Seiten und dem Rand verbundenen Kunststoffbeschichtung beschichtet, die das zwischen den Gehäuseteilen angeordnete Dichtelement bildet, und
f. Die Kunststoffbeschichtung ist im Bereich des Öffnungsrands dicker ausgebildet als in vom Öffnungsrand beabstandeten Bereichen des Mantels.

Der Stoffschluss resultiert daraus, dass die Kunststoffbeschichtung nicht wie klassische Dichtelemente getrennt gefertigt und dann mechanisch auf das erste Gehäuseteil aufgezogen wird. Stattdessen wird die Kunststoffbeschichtung in unmittelbarem Kontakt mit dem ersten Gehäuseteil, nämlich auf seinem Mantel, gebildet. Die Kunststoffbeschichtung ist bevorzugt nicht zerstörungsfrei von dem ersten Gehäuseteil abzulösen.

In einer besonders bevorzugten Ausführungsform zeichnet sich die Knopfzelle durch mindestens einem der unmittelbar folgenden zusätzlichen Merkmale a. bis c. aus:
a. Das erste Gehäuseteil ist einwandig ausgebildet und weist als Öffnungsrand eine endständige Schnittkante auf.
b. Die Dicke der festen Kunststoffbeschichtung nimmt in axialer Richtung zur Schnittkante hin zu.
c. Die feste Kunststoffbeschichtung weist im Bereich des Öffnungsrands einen tropfenförmigen Querschnitt auf.

Besonders bevorzugt sind die Merkmale a. und b., insbesondere die Merkmale a. bis c., in Kombination miteinander realisiert.

Unter einer einwandigen Ausbildung des ersten Gehäuseteils soll insbesondere verstanden werden, dass das erste Gehäuseteil keinen durch Umschlagen gebildeten doppelwandigen Rand aufweist, wie etwa der in Fig. 1 und 2 der JP 2002-373711 A dargestellte Rand des Gehäuseteils 3, der einen axial ausgerichteten, um einen Winkel von 180° umgeschlagenen endständigen Abschnitt aufweist. Stattdessen ist es bevorzugt, dass der Mantel in axialer Richtung bis hin zum Öffnungsrand, insbesondere dem als Schnittkante ausgebildeten Öffnungsrand, einen geraden Verlauf oder einen zumindest überwiegend geraden Verlauf aufweist.

Das erfindungsgemäße Verfahren erlaubt die Herstellung sehr dünner und gleichzeitig sehr sicherer Dichtelemente.

Gemeinhin ist es wünschenswert, dass die Innenseite des Mantels des ersten Gehäuseteils eine möglichst dünne Kunststoffbeschichtung aufweist, um die mit der Beschichtung verbundenen Kapazitätseinbußen möglichst gering zu halten. Hingegen sollte der Öffnungsrand idealerweise dicker beschichtet sein, um im Bereich des Öffnungsrands Beschädigungen der Kunststoffbeschichtung bei der Gehäusemontage zu vermeiden. Mit Foliendichtungen, etwa gemäß der DE 196 47 593 A1, lässt sich dies nicht realisieren. Diese weisen eine gleichmäßige Dicke auf. Mit Spritzguss gefertigte Dichtelemente können zwar mit unterschiedlichen Dicken in unterschiedlichen Bereichen ausgebildet werden. Allerdings sind sehr geringe Dicken nur schwer erreichbar oder aber erschweren den Montageprozess.

Hingegen lassen sich Dichtelemente mit dünnen Wänden, die gleichzeitig aber im Bereich des Öffnungsrandes gezielt verstärkt sind, gemäß der vorliegenden Erfindung problemlos herstellen. In der Folge lassen sich gemäß der vorliegenden Erfindung auch die erwähnten einwandigen Gehäuseteile mit Schnittkante verwenden.

Von besonderer Bedeutung ist die oben beschriebene Ausrichtung des ersten Gehäuseteils beim Trocknen und/oder Härten. Erfindungsgemäß weist der Öffnungsrand des ersten Gehäuseteils zumindest zeitweise senkrecht oder mit einer Abweichung von maximal 5° von der Lotrichtung nach unten, so dass die Ebene des Öffnungsrands des ersten Gehäuseteils die Lotrichtung rechtwinklig oder im mit einer Abweichung < 5° von der rechtwinklig schneidet. Besonders bevorzugt ist die senkrechte Ausrichtung. Hierdurch wird gewährleistet, dass die Kunststoffbeschichtung an jedem Punkt des Öffnungsrands die gleiche Dicke aufweist. Würde man das erste Gehäuseteil schräg ausrichten, würde sich am tiefsten Punkt des Öffnungsrands eine "Tropfnase" bilden. In der Folge wäre die Beschichtung an diesem Punkt dicker, woraus Undichtigkeiten resultieren könnten.

Inwieweit von der senkrechten Ausrichtung des ersten Gehäuseteils abgewichen werden kann, hängt u.a. auch von der Beschaffenheit des Kunststoffvorläufers ab. Je höher dessen Viskosität ist, desto stärker kann von dersenkrechten Ausrichtung abgewichen werden.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung einer bevorzugter Ausführungsform der Erfindung sowie anhand der Zeichnung. Hierbei zeigtschematisch:
Fig. 1 eine Querschnittsdarstellung einer Ausführungsform einer erfindungsgemäßen Knopfzelle sowie die einzelnen Schritte ihrer Herstellung.

Zur Herstellung der Knopfzelle 100 werden das erste Gehäuseteil 101 und das zweite Gehäuseteil 102 bereitgestellt (Schritt A). Beide Gehäuseteile 101 und 102 können beispielsweise aus vernickeltem Stahlblech oder aus Trimetall bestehen. Das erste Gehäuseteil 101 weist den kreisförmigen Boden 101a, den hohlzylindrischen Mantel 101b, den Übergangsbereich 101c und den eine kreisförmige Öffnung definierenden Öffnungsrand 101d auf. Das zweite Gehäuseteil 102 weist den kreisförmigen Boden 102a, den hohlzylindrischen Mantel 102b, den Übergangsbereich 102c und den eine kreisförmige Öffnung definierenden Öffnungsrand 102d auf. Die Gehäuseteile 101 und 102 sind beide einwandig ausgebildet, ihre Öffnungsränder 101d und 102d sind beide als endständige Schnittkanten ausgebildet.

In Schritt B wird das Gehäuseteil 101 in senkrechter Ausrichtung in ein Bad mit dem flüssigen Kunststoffvorläufer 105 eingetaucht. Hierbei wird der Mantel 101b des Gehäuseteils 101 innen- und außenseitig mit dem flüssigen Kunststoffvorläufer 105 benetzt. Die benetzten Bereiche sind jeweils als ringförmige Streifen konstanter Breite ausgebildet und erstrecken sich jeweils ausgehend von dem Öffnungsrand 101d in Richtung des Bodens 101a des ersten Gehäuseteils 101, wobei die Innenseite des Mantels 101b aufgrund von beim Eintauchen eingeschlossener Luft 106 nicht vollständig benetzt wird. Entsprechend übersteigt die Breite des auf die Außenseite des Mantels 101b des ersten Gehäuseteils 101 aufgebrachten ringförmigen Streifens die Breite des auf die Innenseite des Mantels 101b des ersten Gehäuseteils 101 aufgebrachten ringförmigen Streifens.

Nach dem Herausziehen des Gehäuseteils 101 aus dem Bad mit dem flüssigen Kunststoffvorläufer 105 wird der flüssige Kunststoffvorläufer 105 unter Ausbildung einer festen Kunststoffbeschichtung auf dem ersten Gehäuseteil getrocknet und dabei thermisch sowie mit Strahlung gehärtet (Schritt C). Während des gesamten Trocknungsvorgangs wies der Öffnungsrand 101d des ersten Gehäuseteils 101 senkrecht nach unten.

Das Resultat der Trocknung und Aushärtung ist in D dargestellt. Während dem Trocknen und Aushärten konnte ein Teil des auf den Mantel 101b aufgebrachten flüssigen Kunststoffvorläufers 105 nach unten zur Schnittkante 101d laufen und sich dort sammeln. Das Resultat: Die Kunststoffbeschichtung 103 war im Bereich des Öffnungsrands 101d dicker ausgebildet als in vom Öffnungsrand 101d beabstandeten Bereichen des Mantels 101b. Sie weist im Bereich der Schnittkante 101d einen tropfenförmigen Querschnitt auf.

In der unter E dargestellten Knopfzelle bildet die Kunststoffbeschichtung 103 das Dichtelement, das die Gehäuseteile 101 und 102 elektrisch voneinander isoliert und das Gehäuse abdichtet. Die in dem Gehäuse enthaltenen Aktivkomponenten (Elektroden, Separator, Elektrolyt) sind aus Gründen der Übersicht nicht dargestellt.

## Patentansprüche

1. Verfahren zur Herstellung einer Knopfzelle (100), die
a. ein Gehäuse (101, 102, 103) mit einem Innenraum (104), in dem
• eine positive Elektrode und
• eine negative Elektrode und
• ein Separator
angeordnet sind, umfasst, wobei
b. das Gehäuse
• ein becherförmiges, metallisches erstes Gehäuseteil (101) sowie
• ein becherförmiges, metallisches zweites Gehäuseteil (102) sowie
• ein elektrisch isolierendes Dichtelement (103) zwischen den Gehäuseteilen (101, 102) umfasst, und
c. die Gehäuseteile (101, 102) jeweils
• einen kreisförmigen Boden (101a, 102a),
• einen hohlzylindrischen Mantel (101b, 102b),
• einen den Boden und den Mantel verbindenden umlaufenden Übergangsbereich (101c, 102c) und
• einen eine kreisförmige Öffnung definierenden Öffnungsrand (101d, 102d) umfassen, wobei
d. die Böden (101a, 102a) und Mäntel (101b, 102b) jeweils eine in den Innenraum weisende Innenseite und eine in die entgegengesetzte Richtung weisende Außenseite aufweisen und die Öffnungsränder (101d, 102d) jeweils in einer parallel zum jeweiligen Boden ausgerichteten Ebene liegen,
wobei das Verfahren die folgenden Schritte umfasst:
e. Die Innenseite und die Außenseite des Mantels (101b) und der Öffnungsrand (101d) des ersten Gehäuseteils (101) werden mit einem flüssigen Kunststoffvorläufer (105) beschichtet,
f. Der flüssige Kunststoffvorläufer (105) wird unter Ausbildung einer festen Kunststoffbeschichtung auf dem ersten Gehäuseteil getrocknet und/oder gehärtet, wobei der Öffnungsrand (101d) des ersten Gehäuseteils zumindest zeitweise senkrecht oder mit einer Abweichung von maximal 5° von der Lotrichtung nach unten weist, und
g. das Gehäuse wird aus dem ersten Gehäuseteil (101) und dem zweiten Gehäuseteil (102) zusammengesetzt, wobei die Kunststoffbeschichtung das Dichtelement (103) bildet.

2. Verfahren nach Anspruch 1 mit dem folgenden zusätzlichen Merkmal:
a. Das Beschichten des ersten Gehäuseteils (101) erfolgt durch Eintauchen des ersten Gehäuseteils in den flüssigen Kunststoffvorläufer (105).

3. Verfahren nach Anspruch 1 mit dem folgenden zusätzlichen Merkmal:
a. Das Beschichten des ersten Gehäuseteils erfolgt durch Besprühen oder Bepinseln des ersten Gehäuseteils mit dem flüssigen Kunststoffvorläufer.

4. Verfahren nach einem der Ansprüche 1 bis 3 mit mindestens einem der folgenden zusätzlichen Merkmale:
a. Auf die Innenseite des Mantels (101b) des ersten Gehäuseteils (101) wird ein ringförmiger Streifen konstanter Breite aus dem flüssigen Kunststoffvorläufer (105) aufgebracht, der sich ausgehend von dem Öffnungsrand (101d) in Richtung des Bodens (101a) des ersten Gehäuseteils (101) erstreckt.
b. Auf die Außenseite des Mantels (101b) des ersten Gehäuseteils (101) wird ein ringförmiger Streifen konstanter Breite aus dem flüssigen Kunststoffvorläufer (105) aufgebracht, der sich ausgehend von dem Öffnungsrand (101d) in Richtung des Bodens (101a) des ersten Gehäuseteils (101) erstreckt.
c. Die Breite des auf die Außenseite des Mantels (101b) des ersten Gehäuseteils (101) aufgebrachten ringförmigen Streifens übersteigt die Breite des auf die Innenseite des Mantels des ersten Gehäuseteils aufgebrachten ringförmigen Streifens.

5. Knopfzelle (100), umfassend
a. ein Gehäuse (101, 102) mit einem Innenraum (104), in dem
• eine positive Elektrode und
• eine negative Elektrode und
• ein Separator,
angeordnet sind, wobei
b. das Gehäuse
• ein becherförmiges, metallisches erstes Gehäuseteil (101) sowie
• ein becherförmiges, metallisches zweites Gehäuseteil (102) sowie
• ein elektrisch isolierendes Dichtelement (103) zwischen den Gehäuseteilen umfasst, und
c. die Gehäuseteile jeweils
• einen kreisförmigen Boden (101a, 102a),
• einen hohlzylindrischen Mantel (101b, 102b),
• einen den Boden und den Mantel verbindenden umlaufenden Übergangsbereich (101c, 102c) und
• einen eine kreisförmige Öffnung definierenden Öffnungsrand (101d, 102d) umfassen, wobei
d. die Böden (101a, 102a) und Mäntel (101b, 102b) jeweils eine in den Innenraum weisende Innenseite und eine in die entgegengesetzte Richtung weisende Außenseite aufweisen und die Öffnungsränder (101d, 102d) jeweils in einer parallel zum jeweiligen Boden ausgerichteten Ebene liegen,
**gekennzeichnet dadurch, dass**
e. die Innenseite und die Außenseite des Mantels (101b) und der Öffnungsrand (101d) des ersten Gehäuseteils (101) mit einer festen, stoffschlüssig mit den Seiten und dem Öffnungsrand verbundenen Kunststoffbeschichtung beschichtet sind, die das Dichtelement (103) bildet, und
f. die Kunststoffbeschichtung (103) im Bereich des Öffnungsrands (101d) dicker ausgebildet ist als in vom Öffnungsrand (101d) beabstandeten Bereichen des Mantels (101b).

6. Knopfzelle nach Anspruch 5 mit mindestens einem der folgenden zusätzlichen Merkmale:
a. Das erste Gehäuseteil (101) ist einwandig ausgebildet und weist als Öffnungsrand (101d) eine endständige Schnittkante auf.
b. Die Dicke der festen Kunststoffbeschichtung (103) nimmt in axialer Richtung zur Schnittkante (101d) hin zu.
c. Die feste Kunststoffbeschichtung (103) weist im Bereich des Öffnungsrands (101d) einen tropfenförmigen Querschnitt auf.

## Claims

1. Method for producing a button cell (100) which comprises
a. a housing (101, 102, 103) having an interior space (104) in which
• a positive electrode and
• a negative electrode and
• a separator
are arranged, wherein
b. the housing comprises
• a cup-shaped, metallic first housing part (101) and
• a cup-shaped, metallic second housing part (102) and
• an electrically insulating sealing element (103) between the housing parts (101, 102),
and
c. the housing parts (101, 102) each comprise
• a circular bottom (101a, 102a),
• a hollow-cylindrical side wall (101b, 102b),
• a circumferential transition region (101c, 102c) connecting the bottom and the side wall, and
• an opening periphery (101d, 102d) defining a circular opening,
wherein
d. the bottoms (101a, 102a) and side walls (101b, 102b) each have an inner side facing into the interior space and an outer side facing in the opposite direction and the opening peripheries (101d, 102d) each lie in a plane oriented parallel to the respective bottom,
wherein the method comprises the following steps:
e. the inner side and the outer side of the side wall (101b) and the opening periphery (101d) of the first housing part (101) are coated with a liquid polymer precursor (105),
f. the liquid polymer precursor (105) is dried and/or cured to form a solid polymer coating on the first housing part, wherein the opening periphery (101d) of the first housing part is perpendicular for at least part of the time or points downward with a deviation of not more than 5° from the vertical direction, and
g. the housing is made up of the first housing part (101) and the second housing part (102), wherein the polymer coating forms the sealing element (103).

2. Method according to Claim 1 having the following additional feature:
a. coating of the first housing part (101) is carried out by dipping the first housing part into the liquid polymer precursor (105).

3. Method according to Claim 1 having the following additional feature:
a. coating of the first housing part is carried out by spraying or brushing the first housing part with the liquid polymer precursor.

4. Method according to one of Claims 1 to 3 having at least one of the following additional features:
a. a ring-shaped strip composed of the liquid polymer precursor (105) and having a constant width is applied to the inner side of the side wall (101b) of the first housing part (101), said strip extending from the opening periphery (101d) in the direction of the bottom (101a) of the first housing part (101);
b. a ring-shaped strip composed of the liquid polymer precursor (105) and having a constant width is applied to the outer side of the side wall (101b) of the first housing part (101), said strip extending from the opening periphery (101d) in the direction of the bottom (101a) of the first housing part (101);
c. the width of the ring-shaped strip applied to the outer side of the side wall (101b) of the first housing part (101) exceeds the width of the ring-shaped strip applied to the inner side of the side wall of the first housing part.

5. Button cell (100) comprising
a. a housing (101, 102) having an interior space (104) in which
• a positive electrode and
• a negative electrode and
• a separator
are arranged, wherein
b. the housing comprises
• a cup-shaped, metallic first housing part (101) and
• a cup-shaped, metallic second housing part (102) and
• an electrically insulating sealing element (103) between the housing parts,
and
c. the housing parts each comprise
• a circular bottom (101a, 102a),
• a hollow-cylindrical side wall (101b, 102b),
• a circumferential transition region (101c, 102c) connecting the bottom and the side wall, and
• an opening periphery (101d, 102d) defining a circular opening,
wherein
d. the bottoms (101a, 102a) and side walls (101b, 102b) each have an inner side facing into the interior space and an outer side facing in the opposite direction and the opening peripheries (101d, 102d) each lie in a plane oriented parallel to the respective bottom,
**characterized in that**
e. the inner side and the outer side of the side wall (101b) and the opening periphery (101d) of the first housing part (101) are coated with a solid polymer coating which is joined by material-to-material bonding to the sides and the opening periphery and forms the sealing element (103), and
f. the polymer coating (103) is thicker in the region of the opening periphery (101d) than in regions of the side wall (101b) which are at a distance from the opening periphery (101d).

6. Button cell according to Claim 5 having at least one of the following additional features:
a. the first housing part (101) is single-walled and has a terminal cut edge as opening periphery (101d);
b. the thickness of the solid polymer coating (103) increases in the axial direction towards the cut edge (101d);
c. the solid polymer coating (103) has a droplet-shaped cross section in the region of the opening periphery (101d).

## Revendications

1. Procédé de fabrication d'une pile bouton (100), qui comprend
a. un boîtier (101, 102, 103) pourvu d'un espace intérieur (104) dans lequel sont disposés
• une électrode positive et
• une électrode négative et
• un séparateur,
b. le boîtier comprenant
• une première partie de boîtier métallique (101) en forme de coupelle et
• une deuxième partie de boîtier métallique (102) en forme de coupelle et
• un élément d'étanchéité électriquement isolant (103) entre les parties de boîtier (101, 102), et
c. les parties de boîtier (101, 102) comprenant chacune
• un fond circulaire (101a, 102a),
• un corps cylindrique creux (101b, 102b),
• une zone de transition circonférentielle (101c, 102c) reliant le fond et le corps et
• un bord d'ouverture (101d, 102d) définissant une ouverture circulaire,
d. les fonds (101a, 102a) et les corps (101b, 102b) comportant chacun un côté intérieur dirigé vers l'espace intérieur et un côté extérieur dirigé dans la direction opposée et les bords d'ouverture (101d , 102d) étant chacun situés dans un plan orienté parallèlement au fond respectif,
le procédé comprenant les étapes suivantes :
e. le côté intérieur et le côté extérieur du corps (101b) et le bord d'ouverture (101d) de la première partie de boîtier (101) sont recouverts d'un précurseur de matière synthétique liquide (105),
f. le précurseur de matière synthétique liquide (105) est séché et/ou durci pour former un revêtement de matière synthétique solide sur la première partie de boîtier, le bord d'ouverture (101d) de la première partie de boîtier étant dirigé vers le bas au moins par intermittence perpendiculairement ou avec un écart de 5° maximum par rapport à la perpendiculaire, et
g. le boîtier est composé de la première partie de boîtier (101) et de la deuxième partie de boîtier (102), le revêtement de matière synthétique formant l'élément d'étanchéité (103).

2. Procédé selon la revendication 1 présentant la caractéristique supplémentaire suivante : a. le revêtement de la première partie de boîtier (101) est effectué par immersion de la première partie de boîtier dans le précurseur de matière synthétique liquide (105).

3. Procédé selon la revendication 1 présentant la caractéristique supplémentaire suivante :
a. le revêtement de la première partie de boîtier est effectué par pulvérisation ou enduction de la première partie de boîtier avec le précurseur de matière synthétique liquide.

4. Procédé selon l'une des revendications 1 à 3 présentant au moins une des caractéristiques supplémentaires suivantes :
a. une bande annulaire de largeur constante formée du précurseur de matière synthétique liquide (105) est appliquée sur le côté intérieur du corps (101b) de la première partie de boîtier (101), laquelle bande s'étend du bord d'ouverture (101d) en direction du fond (101a) de la première partie de boîtier (101),
b. une bande annulaire de largeur constante formée du précurseur de matière synthétique liquide (105) est appliquée sur le côté extérieur du corps (101b) de la première partie de boîtier (101), laquelle bande s'étend du bord d'ouverture (101d) en direction du fond (101a) de la première partie de boîtier (101),
c. la largeur de la bande annulaire appliquée sur le côté extérieur du corps (101b) de la première partie de boîtier (101) dépasse la largeur de la bande annulaire appliquée sur le côté intérieur du boîtier de la première partie de boîtier.

5. Pile bouton (100), comprenant
a. un boîtier (101, 102) pourvu d'un côté intérieur (104), dans lequel sont disposés
• une électrode positive et
• une électrode négative et
• un séparateur,
b. le boîtier comprenant
• une partie de boîtier métallique (101) en forme de coupelle et
• une partie de boîtier métallique (102) en forme de coupelle et
• un élément d'étanchéité électriquement isolant (103) entre les parties du boîtier, et
c. les parties de boîtier comprenant chacune
• un fond circulaire (101a, 102a),
• un corps cylindrique creux (101b, 102b),
• une zone de transition circonférentielle (101c, 102c) reliant le fond et le corps et
• un bord d'ouverture (101d, 102d) définissant une ouverture circulaire,
d. les fonds (101a, 102a) et les corps (101b, 102b) comportant chacun un côté intérieur dirigé vers l'espace intérieur et un côté extérieur dirigé dans la direction opposée et les bords d'ouverture (101d, 102d) étant situés chacun dans un plan orienté parallèlement au fond respectif,
**caractérisé en ce que**
e. le côté intérieur et le côté extérieur du boîtier (101b) ainsi que le bord d'ouverture (101d) de la première partie de boîtier (101) sont recouverts d'un revêtement en matière synthétique solide qui est relié par une liaison de matière aux côtés et au bord d'ouverture et qui forme l'élément d'étanchéité (103), et
f. le revêtement de matière synthétique (103) est plus épais dans la zone du bord d'ouverture (101d) que dans les zones du corps (101b) qui sont espacées du bord d'ouverture (101d).

6. Pile bouton selon la revendication 5 présentant au moins une des caractéristiques supplémentaires suivantes :
a. la première partie de boîtier (101) est conçue à paroi simple et comporte un bord de coupe terminal comme bord d'ouverture (101d),
b. l'épaisseur du revêtement de matière synthétique solide (103) augmente dans la direction axiale vers le bord de coupe (101d),
c. le revêtement de matière synthétique solide (103) a une section transversale en forme de goutte dans la zone du bord d'ouverture (101d).
